Europäisches Patentamt

European Patent Office

Office européen des brevets

(11) Publication number: **0 242 456 B1**

(19)

(12) **EUROPEAN PATENT SPECIFICATION**

(45) Date of publication of patent specification: **18.03.92**    (51) Int. Cl.⁵: **H02P 8/00,** H02P 7/00

(21) Application number: **86302786.8**

(22) Date of filing: **15.04.86**

(54) **Reluctance motor with electronically connected stator windings.**

(43) Date of publication of application:
**28.10.87 Bulletin 87/44**

(45) Publication of the grant of the patent:
**18.03.92 Bulletin 92/12**

(84) Designated Contracting States:
**AT BE CH DE FR GB IT LI LU NL SE**

(56) References cited:
**EP-A- 0 107 807
US-A- 4 025 831
US-A- 4 025 859
US-A- 4 445 077**

**DESIGN ENGINEERING, May 1984, pages
74-75, London, GB; "Switched reluctance
motor drive systems"**

(73) Proprietor: **Polestar Magnetronics Inc.
463 McNicoll Avenue
Willowdale Ontario, M2H 2C9(CA)**

(72) Inventor: **Kaszmann, John
15 Dallas Road
Willowdale Ontario M2R 2J3(CA)**

(74) Representative: **Newby, Martin John et al
J.Y. & G.W. Johnson Furnival House 14-18
High Holborn
London WC1V 6DE(GB)**

## Description

This invention relates to electric motors operating on the reluctance principle, this term being used in a broad sense to refer to motors in which a changing electromagnetic field is generated by a stator, and poles of a normally unwound ferromagnetic rotor move in that field towards a minimum reluctance position whose angular location is progressively altered by the changing electromagnetic field so as to produce continuous rotation of the rotor. In principle, the functions of the rotor and and stator can be interchanged, but in practice it is usually more satisfactory for the electromagnetic field to be produced by the stator since this eliminates the necessity for slip rings or commutators, and this arrangement will be assumed in the following specification and claims. The polarization of the rotor may be induced in soft magnetic material by the stator electromagnetic field, as is usually the case in reluctance motors as commonly so called, or the rotor poles may be permanently polarized by permanent magnets comprised by the rotor, as in most stepper motors and many forms of brushless direct current motor.

Most electric motors have traditionally been provided with both stator and rotor windings, even though in many induction motors the latter may be simplified to a "squirrel cage", and rely upon either conduction through commutators or slip rings, or upon induction, to energize the rotor. Induction motors normally require an alternating supply for their operation, and are not in general well adapted to variable speed operation since their optimum operating speed is intimately related to the velocity of the rotating field generated by the alternating supply. Direct current motors on the other hand require some form of commutative switching of the supply to the rotor to provide continuous rotation, and such commutators are expensive to build and maintain, as well as a source of undesirable broadband electrical interference. Control of such motors where accurate speeds or displacement control is required remains complex and difficult.

As a result, attention has been given,for a wide range of potential applications ranging from motors for consumer electronic equipment to large appliance, traction and industrial motors, to motors of the reluctance type in which the current through stator windings is switched, usually in modern designs by solid state devices, so as to produce a changing electromagnetic field which will result in progressive angular movement of poles of a stator as it seeks a minimum reluctance position within the field. This movement may be in the form of discrete steps, individually controlled, as in a stepper motor, or the movement of the rotor may be sensed by some suitable means to switch the current through the stator windings so as to provide a free running mode in which successive steps or impulses run together to provide continuous rotation. Regardless of the mode employed, the inductance of the windings provides difficulties as they are progressively switched, since it limits the rate of increase of the current upon energization and the rate at which magnetic energy can be dispersed when no longer required, particularly if excessive potentials are not be induced in the windings.

One widely used approach to the second of the above problems has been to utilize so-called "free-wheeling" diodes connected across the various windings. When external current to a winding is interrupted, the diode provides an alternative path for the current induced in the winding by the collapsing magnetic field, and the current thus recirculates until the field is fully collapsed, giving a slow fall in current. The rate of collapse can be increased by incorporating a resistive element in the circuit, but this reduces efficiency. Such a resistive element can also be used to assist rapid build up of the field, by acting as a current limiting device which permits application of higher energization potentials than would otherwise be possible. In many actual or potential applications of such motors, efficient operation and high torque over a wide range of speeds is required, and to attain these objectives it is necessary to achieve rapid current rise and fall times in the windings without unnecessary dissipation of energy as heat so that the fields of the stator and rotor can be maintained in optimum relationship. If rise and fall times are too slow, there will either be overlap with different windings producing opposing fields at some stages in the cycle, or the speed and/or torque obtainable will be limited.

One approach to the problem of obtaining rapid fall times has been to regenerate current from the stator windings to the supply. Thus in United States Patent No. 4,229,685 issued to Meier, the free-wheeling diodes are supplemented by diodes which divert current through a regulator circuit and back to the supply thus recovering the energy stored by the field generated by a winding following de-energization of the latter whilst assisting in rapid collapse of the field. In order to promote rapid build up of the magnetic field, however, Meier utilizes a chopping current regulator to limit current through the motor winding, which also serves to select a particular winding, together with a secondary switch which takes the free-wheeling diode out of circuit except when that winding is energized. Such a system requies that the supply potential to the motor be high enough to provide the desired rate of current build up in the windings, and also requires the use of chopping regulators capable of sustaining the supply potential. The Meier patent refers to a stepping motor which can be operated in free running mode. A somewhat similar arrangement is described in U. S. Patent No. 4,459,519 issued to Erdman. This relates to a motor with a permanent magnet rotor apparently primarily intended for refrigeration systems, and whilst a different system is used for regulating the current in the windings, the rate of current build up is still limited by the supply potential. Yet further similar arrangements as applied to various configurations of motor having magnetic rotors of both homopolar and heteropolar constructions are described in U. S. Patent No. 3,826,966 issued to Nagasaka et al. Yet a further arrangement operating upon this principle is shown in U. S. Patent No. 3,748,554 issued to McDonald.

A further problem which frequently arises in the design of brushless DC motors is that of turning off the switching semiconductors utilized to provide control of the current supplied to the field windings. The most readily available and economical semiconductors for the purpose are thyristors which have a controlled turn on ability but usually can only be turned off by reducing the current through the device to near zero. Furthermore, when turn off is achieved, stored energy in the inductive circuits being controlled can give rise to high potential spikes which can destroy the semiconductors if not properly controlled. For this reason commutation circuits have been developed for use in such applications which are essentially of ring counter configuration in that the turn on of the device controlling one winding is utilized to discharge one plate of a capacitor connected to the supply to the previously turned on device so as momentarily to divert the current to that device to the other plate of the capacitor and thus interrupt the current flow through the device for long enough that it switches off. Once it is switched off, recharging of the capacitor occurs, thus taking up some of the energy from the collapsing field of the associated winding.

Although the capacitors used in such circuits can contribute to the transfer of surplus energy from one winding to the next, this is not their primary purpose, and the arrangement is only useful in cases where the supply to a following winding can be turned on before that to a previous winding is terminated. Examples of such arrangements may be found in United States Patents Nos. 3,611,081 issued to Watson, and 4,445,077 issued to Kirschner.

In United States Patent No. 3,444,447 issued to Newell, an arrangement is described for improving the rise and fall times of currents in the windings of a step motor. Firstly, the supply is utilized to charge capacitors associated with control circuits for each winding, the circuit being arranged and the capacitor being switched so that its charge potential is added to the supply potential when the associated winding is energized, thus initially boosting the supply potential and improving the current rise time. Additionally, as described with reference to Figures 7 to 9, an arrangement using diodes and/or autotransformers is utilized to transfer energy from the collapsing field of a winding which has just been turned off to boost the potential applied to a winding that has just been turned on, thus improving both rise and fall times and improving efficiency. The first of the techniques disclosed by Newell provides a degree of boost which is substantially constant regardless of operating conditions, whilst the second technique is applicable only where the turning on of one winding is simultaneous with the turning off of another.

In United States Patent No. 3,486,096, issued to Van Cleave, windings of a stepper motor are transformer coupled in pairs, and the switching means for each winding is operative to block current flow in a forward direction only. One or more diodes are placed in series with a D.C. supply so that current can flow from the supply in a forward direction only, and unswitched ends of the windings, or pairs of them, are connected to a capacitor or capacitors whose other plates are grounded. When forward current through a winding is interrupted, a current in the reverse direction is induced in the winding coupled thereto, and charges the associated capacitors to a high potential, whilst the field produced by the original winding rapidly collapses. When a switching device again permits forward current through a winding connected to the capacitor, the high potential charge on the capacitors assists rapid current build up in that winding. The primary purpose of the arrangement is to speed up operation and protect the switching device; efficiency is evidently not a concern since resistors are placed in series with the supply to limit current. Moreover, the device is applicable only to motors having a suitable winding arrangement so that transformer action may be utilized to reverse the direction of current flow in the windings during energy recovery.

In an alternative arrangement shown in US-A-4025859, additional diodes are employed through which each capacitor is connected to the switched end of one winding and the unswitched ends of each of the other windings. This avoids the limitation to use with transformer coupled windings but is otherwise subject to the same comments as the arrangement of US-A-3486096, that is to say its primary object is to speed up switching rather than to improve efficiency.

EP-A-0107807 describes a driving circuit for a step motor having at least two pairs of magnetically coupled windings. The drive circuit includes a first controlled switching device in series with each phase winding and a diode and a capacitor connected in parallel with each pair of phase windings. A further diode is associated with each phase winding. In chopping operation during deenergization, the capacitor is charged by a winding coupled to the winding being switched off and during energization this capacitor is serial connected with the winding and the supply. However this known arrangement is primarily concerned with achieving fast phase switching.

A group of related United States Patents, Nos. 3,560,817 and 3,560,818 issued to Amato, 3,560,820, 3,697,839 and 3,714,533 issued to Unnewehr, and 3,697,840 issued to Koch, and all assigned to Ford Motor Company, relate to various configurations of control circuits for reluctance type motors, in each of which a tuned circuit comprising capacitors and inductors (which may be or comprise the motor winding) are used in conjunction with solid state switching elements, utilizing resonance effects to increase the effective potentials available to provide fast rise and fall times, and to reverse the polarity of charge received from the circuit when a primary supply is cut off. Although there are differences between the arrangements described in these various Ford patents their general principle of operation relies on drawing current from the primary supply in pulses of approximately half-sine wave form. Since the period of the pulses is set at a substantially constant magnitude by the reactive components in the circuit, provision for different motor speeds is provided by varying the number of pulses delivered during each energization phase of a winding, substantial continuity of current flow in the winding between pulses being obtained both by freewheeling effects and by charge reversal and re-application of energy recovered during field collapse. In some of the arrangements, the circuit is operated so as to build up potential on a capacitor to a level much greater than the supply, which potential is applied so as to augment the magnitude of the current pulses from the supply. In the Unnewehr Patent No. 3,714,533, it is disclosed that surplus energy from this capacitor may be tapped off by suitably timed firing of an SCR and returned to the supply if not required to drive the motor. Various methods for controlling the various motors disclosed are discussed, in general involving fairly complex control of the firing sequence of the several controlled rectifiers associated with each winding. In each case, it appears that operation requies an inductor in series with the supply additional to the motor winding, and that the operating parameters of the circuit are critically dependent upon the value of this inductor and also those of an energy storage capacitor. These same elements also limit the rate at which energy can be drawn from the supply, since the resonant characteristics of the load limit both the periods over which current can be drawn from the supply and the rate of supply current rise and fall.

United States Patent No. 4,025,831 discloses a motor having in one embodiment plural stator windings and a permanent magnet homopolar rotor in a physical arrangement somewhat resembling the physical arrangement of the preferred embodiment of the motor described hereinbelow. The control system of the motor is however quite different, as is the mode of operation, no special provision being made for improving current rise and fall times in the stator windings, or for recovering energy from collapsing stator fields.

An object of the present invention is to provide a motor of the general class discussed in which rapid rise and fall of winding current can be obtained at timings appropriate to ensure effective development of motor torque over a wide range of motor speeds, without the necessity for expedients which are wasteful of energy (such as added series resistance), without unduly restricting the rate at which energy can be drawn from the supply to meet torque demands, and without the necessity for highly sophisticated control means for matching motor characteristics to load requirements.

According to the invention there is provided an electric motor as claimed in the ensuing claim 1.

As compared to the Van Cleave arrangement the present invention does not require any special arrangement or operating sequence of the motor windings to utilize the energy recovered by the capacitor, nor does the primary stitching device need bidirectional current carrying capabilities, and the ability to withstand, in blocking condition, the additional potential applied by transformer action in the windings.

As compared to the Ford patents discussed above, the values of reactive components in the present invention limit neither the maximum current which can be drawn from the supply, nor the proportion of the active period of a phase winding during which current may be drawn if necessary. Essentially, the value of the capacitor in relation to the inductance of the associated winding determines the rates of current rise and fall which can be achieved in the winding, and the proportion of the active period of a phase winding during which it is necessary for current to be drawn from the supply. Under normal operation, the current to energize a winding is supplied from the capacitor, and current is only drawn from the supply in the latter part of the period during which the primary switching means is switched on, this current draw providing make-up for energy output to a load or dissipated by motor losses. The charge on the capacitor can be tapped by a suitable circuit so that the motor can operate as a D.C. to D.C. up-converter, or energy recovery or regeneration braking under overrun conditions. Under such overrun or braking conditions the energy stored in the capacitor will be in excess of that required to maintain rotation of the motor and the excess may be recovered by drawing current from the capacitor when its potential exceeds a certain level.

Further features of the invention, and further explantion of its construction will become apparent from the following description of an exemplary embodiment with reference to the accompanying drawings.

Figure 1 is a front elevation of the stator and rotor of apparatus embodying the invention;

Figure 2 is a section taken along line 2-2 in Figure 1;

Figures 3a and 3b are views similar to Figure 2 showing various positions of the rotor and stator and useful in explaining the operation of the apparatus;

Figure 4 is a circuit diagram useful in explaining the switching operation that takes place in the practice of the present invention;

Figure 5 is a circuit diagram of trigger pulse generating and switching circuitry that may be used in practicing the invention; and

Figure 6 is a circuit diagram showing an arrangement alternative to that shown in Figure 4.

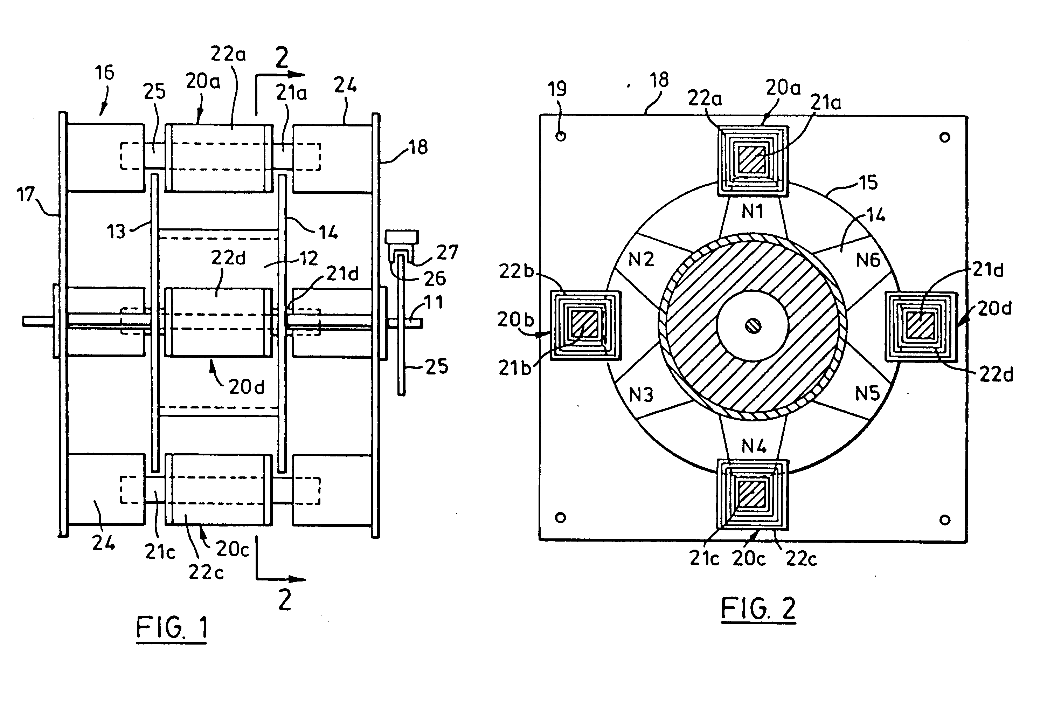

Referring to Figure 1, and sometimes to Figure 2 apparatus embodying the present invention includes a rotor 10 which, in the embodiment shown, includes a rotatable shaft 11 on which a permanent magnet 12 is mounted and fixed, e.g. by keying or by any other suitable means, and on which two, spaced apart toothed wheels 13 and 14 are mounted and fixed, again by keying or by any other suitable means.

The toothed wheels are identical to each other and, in the embodiment shown, each have six teeth spaced 60° apart.

This is not critical, however, and the number of teeth may vary widely. The toothed wheels are mounted with respect to each other on shaft 11 so that the teeth of the toothed wheels align with each other.

Each toothed wheel is made of a magnetizable material, i.e., a ferromagnetic material, e.g., steel, and thus each tooth of each toothed wheel constitutes either a north or a south pole, all of the teeth on one toothed wheel being of the same polarity and all of the teeth on the other toothed wheel also being of the same polarity but of opposite polarity to that of the teeth of the first-mentioned toothed wheel. In Figure 2 the six teeth of toothed wheel 14 are shown as north poles N1 to N6 inclusive.

Many variations in the rotor are possible. For example, individual permanent magnets may be employed in place of one permanent magnet and ferromagnetic toothed wheels, or the rotor may be magnetized by fields produced by windings on the stator. Moreover, heteropolar as well as homopolar rotor pole configurations may be utilized with suitable stator winding configurations. In the example described, however, the rotor will have permanent magnet means mounted on and fixed to a rotatable shaft, the permanent magnet means having a plurality of spaced apart north poles and a plurality of spaced apart south poles, and both homopolar sets of poles will be movable in two circular paths, one of which is shown at 15 in Figure 2.

In the embodiment of the invention shown, the stator 16 consists of two spaced apart stationary plates 17 and 18 that happen to be of square configuration and that are held in fixed, parallel relationship with respect to each other by suitable spacers or fastening devices 19; four electromagnets 20a, 20b, 20c and 20d; and holders 24 for the electromagnets.

Plates 17 and 18 may be made of aluminum, for example, as may holders 24 and spacers or fastening devices 19. Other suitable materials that are non-ferromagnetic also may be employed.

Each electromagnet 20a, 20b, 20c and 20d consists of a ferromagnetic core 21a, 21b, 21c and 21d respectively and a coil 22a, 22b, 22c and 22d respectively. Holders 24 are secured to plates 17 and 18 and cores 21a-21d fit into openings provided in holders 24.

The number of electromagnets may be varied without departing from this invention, but sufficient electromagnets must be employed to make it possible to create a progressively changing magnetic field which, through interaction with the permanent magnets of rotor 10, causes rotation of rotor 10.

Electromagnets 20a - 20d are evenly spaced apart from each other (at 90° in the illustrated embodiment) and, as best shown in Figure 2, are mounted sufficiently close to the circular paths travelled by the north and south poles of rotor 10 that the poles are capable of inducing voltages in the coils of the electromagnets and the electromagnets are capable of magnetically attracting and/or repelling the poles as the latter rotate past the electromagnets.

It will be understood, of course, that plates 17 and 18 carry bearings for shaft 11, and shaft 11 may be coupled to any rotary equipment that is to be driven thereby.

Mounted on shaft 11 is an apertured timing wheel 25 on opposite sides of which are light sources 26 and photodetectors 27. These components constitute a source of trigger pulses or timing pulses. Light sources 26 and photodetectors 27 are mounted on a holder which can be rotated relative to the apertures in timing wheel 25 to vary the phasing of the trigger pulses.

It will be appreciated, of course, that many other types of devices may be used for generating trigger pulses without departing from the present invention. For example, a microswitch contacted by a projection on shaft 11 could be used.

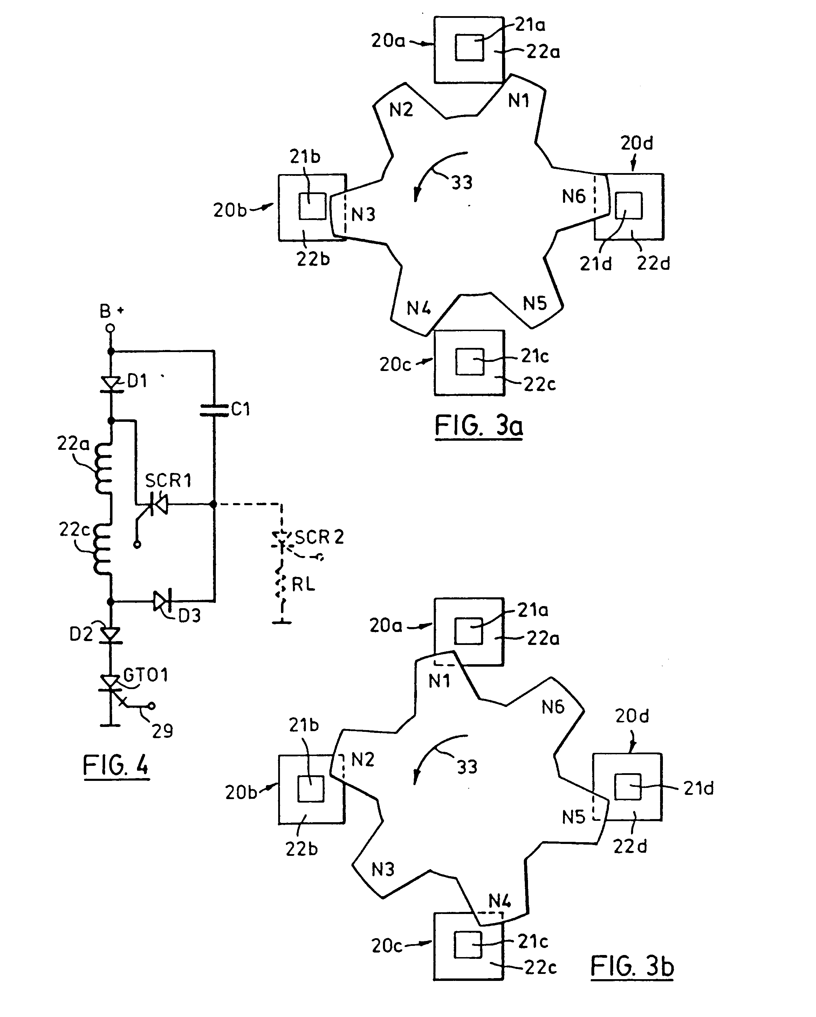

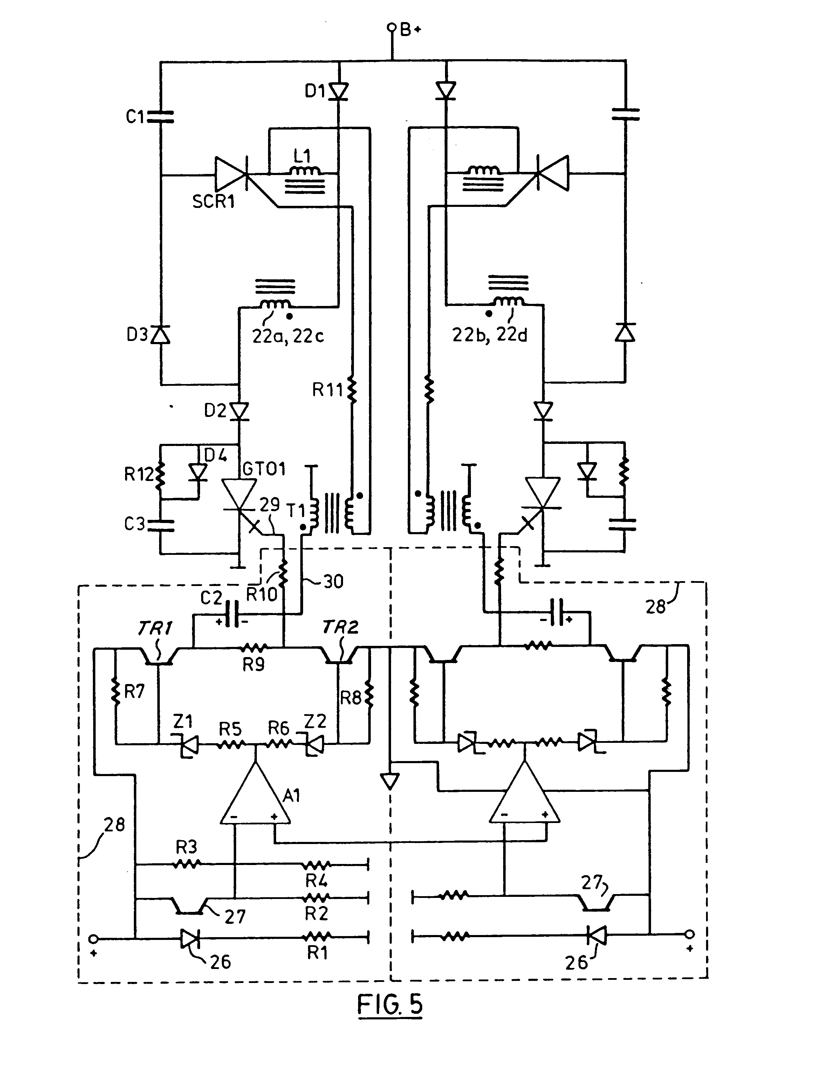

Referring now to Figure 5, the trigger pulse generating and switching circuitry for coils 22a and 22c and for coils 22b and 22d is shown along with electrical energy utilization circuitry. Only the switching circuitry and electrical energy utilization circuitry for coils 22a and 22c is shown in Figure 4. The switching circuitry and electrical energy utilization circuitry for coils 22b and 22d is the same as that shown in Figure 4, as will be evident from Figure 5.

Since the trigger pulse generating circuitry, switching circuitry and electrical utilization circuitrys is the same for two sets of coils, it will be described in detail only for coils 22a and 22c.

Shown within line 28 is a standard trigger pulse generating circuit that provides trigger pulses on conductors 29 and 30, the former being connected to the gate electrode of a gate turn off device GTO1 and the latter being connected via a transformer to the gate electrode of a silicon controlled rectifier SCR1.

A D.C. power supply (represented by B+ and ground) is provided with B+ being connected via a diode D1, coils 22a and 22c and a protection diode D2 to the anode of gate turn off device GTO1, the cathode thereof being grounded. Provided that the pulse generating circuit is suitably modified to provide appropriate switching waveforms and potentials, the gate turn off devices may be replaced by bipolar or field effect transistors.

Also associated with coils 22a and 22c is an electrical energy storage device which, in the embodiment shown in Figures 4 and 5, is simply a capacitor C1.

One plate of the capacitor is connected to a terminal of the supply; in the example shown this is the B+ terminal. Any connection is acceptable that will provide a low impedance source or sink for capacitor charging and discharging currents required to accommodate changes in potential of the other plates. This other plate is provided with two alternative connections to opposite ends of the phase winding comprising the coils 22a and 22c (in the example shown in Figure 4). The first connection is to that end of the winding electrically adjacent the switching means provided by the gate turn off device GTO1 and its associated protection diode D2, and incorporates the diode D3 so that this connection can only accommodate charging currents tending to increase the potential on the associated plate of capacitor C1. The second connection is made to the other end of the winding via a thyristor SCR1, which when triggered on will pass discharging currents from the associated plate of capacitor C1. The diode D1 prevents the thyristor from appearing when turned on as a short circuit across capacitor C1, and permits the other end of the winding to rise to a potential above B+.

Referring to Figure 5, the left and right halves of the circuit shown are identical and essentially independent except for sharing one bias circuit as a matter of convenience, and except that in the example shown they receive input from separate sets of light sources 26 and photodetectors 27, spaced 90° apart in relation to the timing wheel 25 so that they operate 90° out of phase with one another, and the left half of the circuit incorporates the coils 22a, 22c whereas the right half incorporates the coils 22b, 22d.

Each trigger circuit 28 has an input amplifier A1 connected to a bridge formed by resistors R2, R3 and R4 (R3 and R4 being common to both amplifiers) and a phototransistor forming the photodetector 27. When apertures in the wheel 25 permit light from a light emitting diode fed through resistor R1 and forming the light 26 to fall off the photodetector, the collector to emitter resistance of the latter falls and reverses the direction of imbalance of the bridge, thus causing the comparator A1 to apply a switching transition to the conventional push-pull output circuit formed by complementary transistors TR1 and TR2 and associated bias components R5, R6, R7, R8, R9 and zener diodes Z1 and Z2. The output of this circuit is applied via a current limiting protection resistor R10 to the device GTO1 via line 29, and via a differentiating capacitor C2, a pulse transformer T1, and a current limiting protection resistor R11 to the gate of thyristor R1. A small inductance L1 is located in series with the cathode of the thyristor to limit the rate of current increase through the thyristor to within its specifications. This inductance, and other components already mentioned, and the resistor R12, capacitor C3 and diode D4 associated with the gate turn off device GTO1, whose purpose is solely the protection of associated components, do not significantly alter the operating mode of the circuit, and they will not be further discussed. The actual values of the components utilized, and the selection of the semiconductors to be utilized, is heavily dependent upon the size of the motor and the supply potential utilized, and the necessity to operate within the specifications of the available semiconductors under all anticipated operating conditions.

The operation of the apparatus can best be understood by referring to Figures 3a and 3b.

For purposes of explanation it will be assumed that the poles of toothed wheel 14 are north poles and thus that the poles of toothed wheel 13 are south poles. It will also be assumed that rotation of rotor 10 in a counter-clockwise direction, as shown by arrow 33, has already started.

When toothed wheel 14 is in the position shown in Figure 3a, silicon controlled rectifier SCR1 and gate turn off switch device GTO1 are off and no current from the D.C. power supply flows through coils 22a and 22c. As a consequence, electromagnets 20a and 20c are de-energized. Nevertheless, cores 21a and 21c attract poles N1 and N4 respectively of toothed wheel 14 as these seek a minimum reluctance position. This attraction coupled with the inertia of rotor 10 carries rotor 10 to the position shown in Figure 3b. As poles N1 and N4 move past de-energized coils 22a and 22c respectively from the position shown in figure 3a to the position shown in Figure 3b, currents are induced in the coils as a result of movement of poles N1 and N4 past them. The induced current is in a sense such as to charge capacitor C1 through its first connection via diode D3.

Once the position of Figure 3b has been assumed, an aperture in wheel 25 passes diode 26 resulting in a trigger pulse on conductor 29 which triggers gate turn off device GTO1 into conduction. At the same time a trigger pulse on conductor 30 triggers silicon controlled rectifier SCR1 into conduction. Initially the charge on capacitor C1 will be sufficiently large that diode D1 will be reverse biased and capacitor C1 discharges via thyristor SCR1 through coils 22a and 22c and gate turn off device GTO1. Eventually the charge on capacitor C1 may decrease sufficiently that diode D1 will no longer be reverse biased and current from the D.C. power supply flows in coils 22a and 22c. The current, first from capacitor C1 and then from the supply causes the poles of electromagnets 20a and 20c that are adjacent poles N1 and N4 to become north poles. The resulting magnetic repulsion between electromagnet 20a and pole N1 and between electromagnet 20c and pole N4 causes continued counterclockwise rotation of rotor 10. Silicon controlled rectifier SCR1 turns off in this period as the discharge current from the capacitor falls to zero. After poles N1 and N4 have rotated a pre-determined amount beyond electromagnets 20a and 20c respectively, the wheel 25 shuts off light falling on phototransistor 27 from diode 26, applying a negative potential to line 29 and turning off the device GTO1. This results in the D.C. power supply being disconnected from coils 20a and 20c, whereupon a similar cycle is repeated but this time with poles N6 and N3 interacting with electromagnets 20a and 20c respectively. Intermediately, a similar cycle occurs, involving the lower half of the circuit of Figure 5, the poles N2 and N5 and the electromagnets 20b and 20d respectively. In addition, the same cycle will have been repeated previously but with poles N3 and N6 and electromagnets 20b and 20d respectively.

Of course the same sequence of events is occurring with respect to toothed wheel 13 and electromagnets 20a - 20d except that the opposite poles of electromagnets 20a - 20d adjacent toothed wheel 13 are alternately energized to form south poles rather than north poles.

In general, the poles on the rotor will always tend to seek positions such as to minimize the reluctance of the magnetic circuits set up between the rotor and the stator. This reluctance will be a minimum in the case of poles adjacent de-energized electromagnets when the poles and magnets are angularly aligned. However, when all of the electromagnets are de-energized, the seeking forces will tend to cancel each other out because of the relative configurations of the rotor and stator. In the case already described of electromagnets energized so that their poles have the same polarity as adjacent poles of the rotor and therefore repel one another, the reluctance will be a minimum when the electromagnet pole is midway between two rotor poles. In the case of electromagnets energized so that their poles have the opposite polarity to adjacent poles of the rotor and therefore attract one another, the reluctance will again be a minimum when the electromagnet pole is aligned with a rotor pole. The connections of the coils 22a, 22b, 22c, 22d may be oriented for operation in either of these two modes, i.e. either repulsion operation or attraction operation. By providing duplicate sets of coils on each electromagnet, with a first winding on a particular magnet in series or parallel with a second winding on an adjacent magnet, both modes may be used simultaneously to obtain greater torque from a given motor configuration. Whilst the sense of the connections to the coils and the orientation of the disc 25 may be altered to accommodate those various modes of operation, the mode of operation of the circuit of Figures 4 and 5 remains substantially the same.

In order to maximize the mean torque available from the motor and minimize losses, it is desirable that the electromagnets be energized only when the rotor poles adjacent the electromagnet poles are moving towards a minimum reluctance position. If the magnets are energized during a period when the adjacent rotor poles are moving away from a minimum reluctance position, a countertorque will be produced during this period. This condition is typical for example of a stepper motor operated in a discrete stepping mode, in which the interaction of the rotor and stator produces in each step first an accelerating torque as the rotor moves towards a new minimum reluctance position, and then a holding torque as it reaches and moves through this position. It is however undesirable in a motor intended for continuous running.

Correct energization of the electromagnets is not merely a matter of correctly timing the switching of current to the electromagnet windings since the latter posses substantial inductance, which moreover varies with the reluctance of the magnetic circuit with which they are associated. As a result, the rate of build up of current in the winding, and thus the rate of energization, is determined by the value of this inductance and the potential applied to the winding. As the current builds up, so does the energy stored in the magnetic circuit. In order to de-energize the magnet, it is not sufficient merely to interrupt the current through the winding, since the stored energy must also be removed in some manner. For efficient operation this energy should be recovered and used productively. Furthermore, to obtain a high specific power output from the motor, in the form of good torque at high speeds of rotation, it is necessary that both energization and de-energization of the magnets be as rapid as possible.

In the arrangement described, and referring to Figure 4, let it be assumed as a convenient starting point that the switching device GTO1 is switched on and current is passing (using the positive to negative current flow convention) from the supply $B^+$ through diode D1, coils 22a and 22c, diode D2 and device GTO1 to the supply ground. The current in the coils 22a and 22c results in a corresponding magnetic flux in the magnetic circuits associated with the coils. Device GTO1 is now turned off, interrupting the circuit through the supply. The tendency of the flux in the magnetic circuits to collapse induces potentials in the coils such as to tend to oppose this collapse, and these potentials result in the forward current in the coils continuing through the alternative path provided by the diode D3, the capacitor C1, and the diode D1. This forward current continues until the potential across the capacitor C1 equals that induced across the coils, by which time most of the available energy from the collapsing magnetic field has been transferred to the capacitor C1. Assuming that thyristor SCR1 remains in a blocking condition, the capacitor will then remain charged since it cannot discharge through the diodes D1 and D3. The time required for this transfer of energy to the capcitor is determined by the resonant frequency of the tuned circuit formed by the windings 22a, 22c and the capacitor C1, being rather less than the period of one half cycle. Oscillation of the circuit is suppressed by the diodes D1 and D3, and therefore by suitable choice of capacitance and inductance value, very rapid de-energization of the magnets can be obtained, whilst the capacitor C1 can be charged to a potential much greater than the supply potential.

When energization of the coils 22a and 22c is again required, device GTO1 is again switched on, and thyristor SCR1 is simultaneously switched on. If the potential at the lower plate of C1 exceeds $B^+$, as will normally be the case, diode D1 will be reversed biased, and current will endeavour to flow from C1 and SCR1 through coils 22a and 22c and device GTO2 to ground. The rate of build up of current through the coils will depend on the potential available at the lower plate of C1, provided that its upper plate has a low impedance path to ground, in this case through a terminal of the supply. Since this available potential will usually be much greater than the supply potential, the rate of current build up on the coils will in turn be much greater than would be the case were only the regular supply potential available to produce this build up.

The interaction of the rotor and stator to seek minimum reluctance position is an attempt to minimize the energy stored in the magnetic circuits, the enery released upon resulting relative movement being available as mechanical energy (disregarding iron, copper and frictional losses). When the motor is running, energy will be required from the supply to supplement that available from the capacitor C1 only to make up losses and to replace mechanical energy delivered by the motor to a load. Each time the device GTO1 is switched on, current to the windings will be initially supplied from the capcitor C1. When the potential on the lower plate of C1 drops below the supply potential, make up current will then pass from the supply through diode D1 until the device GTO1 is switched off. Under overrun conditions, the back EMF generated in the coils may be such that potential on lower plate of C1 never drops low enough to allow diode D1 to become forward biased.

In the arrangement shown, the upper plate of capacitor C1 draws current from the supply during its discharge, and in effect appears, so far as the coils are concerned, in series with the load. If the upper plate (as shown in Figure 4) is connected to ground then it will draw no curent from the supply during discharge, but will draw current during charging. Either of these connections may be utilized, or any other connection which provides a low impedance path between the upper plate and the supply.

For various reasons, it may be desirable to withdraw energy from the capacitor C1. Firstly, it may be necessary to avoid the build up of excessive potentials across the capacitor which might cause breakdown of the associated semiconductor devices or the capacitor itself. Secondly, such withdrawal enables energy recovery from the motor during overrun conditions or if the motor is being driven to form a generator. Thirdly, it enables a measure of speed control to be exercised by inceasing the rise time of the current in the windings. Finally, it enables the motor to be utilized as a step-up DC to DC converter, since the output potential which can be obtained can be considerably higher than the supply potential. A possible means for achieving such energy withdrawal is illustrated in Figure 4 in broken lines, in the form of a suitably controlled thyristor SCR2, having its anode connected to the lower plate of C1, and its cathode connected to a load RL.

The timing of the trigger signals applied to the primary switching devices such as GTO1 and the secondary switching devices such as SCR1 is important to the attainment of maximum power output. Some adjustment of the theoretical optimum positions is desirable in order to ensure a particular sense of rotation, and in order to facilitate starting.

In practice, with apparatus of the type shown in Figure 2 operating in the mode first described, successful results have been achieved by energizing the coil of each electromagnet to repel its associated pole of toothed wheel 14 about 7.5° past top dead centre and maintaining its coil energized until the pole in questions has reached about 22.5° past top dead centre. These figures are exemplary only and should not be construed as limiting. For example, by delaying turn off of a winding, the rotor will be subjected to a countertorque as it moves past its minimum reluctance position, reducing the net transfer of kinetic energy by the rotor and thus reducing motor speed for a given load.

It should be noted that as rotor 10 speeds up (for example as result of increasing the voltage of the D.C. power supply), it is necessary, in order to obtain energization and de-energization at these angles, to move both photocell 27 and light sources 26 relative to timing wheel 25 so that photocell 27 is activated earlier in the cycle. This is because of the finite time required for the triggering current to build up. Movement of these components can be effected manually or automatically. In the latter case the holder for the photocell and light source can be driven by a motor whose output shaft position is responsive to changes in the speed of shaft 11.

Although in the embodiment described and in the following claims, the connection to the capacitor C1 are described as being made to the ends of the phase winding, it is intended that functionally equivalent arrangements be comprised within the scope of the invention. Thus the connections to the capacitor could be made from an additional portion of the winding, transformer coupled to the remainder.

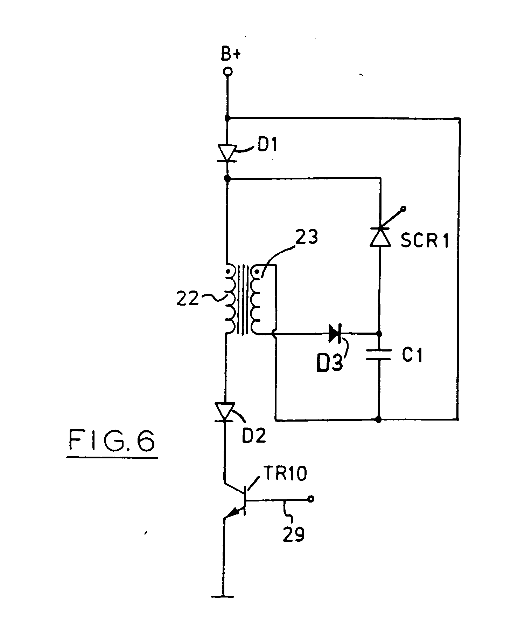

An example of such an arrangement is illustrated in Figure 6, showing the essentials of an alternative circuit which may replace the circuit of Figure 4. A number of the components whose function is the same have been allotted the same reference numerals. The windings 22a and 22c have been represented simply by the reference 22, which may represent either a pair of diametrically opposed stator windings or a single winding according to the configuration of the motor. The gate turn off device has been shown replaced by a switching transistor TR10 which will operate similarly but requires a continuous signal at its base electrode during the time that it is turned on. The capacitor C1 has been shown with its alternative connection to ground rather than B+.

The above changes essentially merely illustrate possible variants already discussed above. The most significant difference between Figures 4 and 6 is the use of a secondary winding or windings 23 to derive the charging current for capacitor C1. This winding (or windings) 23 is preferably bifilar wound with the winding(s) 22 to provide close coupling (although a closely coupled step-up configuration could be used) and is isolated from the primary windings. One end of the winding 23 is connected to diode D1 which provides a unidirectional path from B+ through winding 23 to capacitor C1. Although the other plate of capacitor C1 may be connected to either B+ or to ground, as in the case of the embodiment of Figure 4, the other end of the winding 23 should be connected to B+, either directly or through diode D1, rather than to ground, since otherwise a potential equal to the supply potential must be developed across winding 23 before the capacitor can begin to charge.

## Claims

1. An electric motor having a stator with multiple sequentially energizable phase windings and a rotor magnetized to seek a minimum reluctance position within a progressively moving electromagnetic field produced by said phase windings, first controlled switching means (GTO1) in series relative to a D.C. power supply with at least a part of each phase winding, means to control said first controlled switching means to produce said progressively moving electromagnetic field, a charge storage capacitor (C1) associated with each phase winding (22) with one terminal of said capacitor connected by a low impedance path to said supply, and first and second diode means (D3, D1) associated with each phase winding, the first diode means (D3) establishing a connection between the other terminal of the capacitor (C1) and said winding, and being oriented to permit low impedance passage to said capacitor from the winding of forward current generated by collapse of the field produced by said winding after turn-off of the switching means, and the second diode means (D1) being provided between the supply and the phase winding such as to present a low impedance path for forward current from the supply but a high impedance to reverse current, characterized in that an alternative connection is established between the other terminal of the capacitor (C1) and said winding through second controlled switching means (SCR1), and in that means are provided to turn on said second switching means (SCR1) substantially simultaneously with said first switching means (GTO1) to provide low impedance passage of current from said capacitor (C1) in the forward direction through said winding (22) to said first controlled switching means.

2. A motor according to claim 1, characterized in that the rotor (10) has a homopolar rotor configuration.

3. A motor according to Claim 2, characterized in that the rotor (10) is permanently magnetized.

4. A motor according to Claim 3, characterized in that the rotor (10) includes a rotatable shaft (11) and permanent magnet means (12, 13, 14) mounted on and fixed to said shaft and having a plurality of spaced apart north poles and a plurality of spaced apart south poles, said poles being movable in two circular paths, the stator (16) includes a plurality of spaced apart electromagnets (20) each including at least one coil (22) comprised by one of said phase windings and mounted so that energization of the coils comprised by different phase windings produces minimum reluctance of the magnetic circuits linking the rotor and the stator at different angular positions of the rotor, and in that the means (28) to control said first switching means (GTO1) is responsive to rotation of said rotor (10) for generating control signals turning the first switching means (GTO1) in series with each phase winding on as the rotor moves towards a minimum reluctance position and turning said first switching means off before the rotor passes said minimum reluctance position.

5. A motor according to Claim 4, characterized in that said first switching means (GTO1) are turned on for permitting energizing current to flow in said coils (22) in a predetermined sequence to create a magnetic field that repels said poles of said permanent magnet means (12, 13, 14) after said permanent magnet means have rotated past said electromagnets (20).

6. A motor according to Claim 4 or 5, characterized in that said first switching means (GTO1) are turned on for permitting energizing current to flow in said coils (22) in a predetermined sequence to create a magnetic field that attracts said permanent magnet means (12, 13, 14) as said permanent magnet means rotate towards said electromagnets (20).

7. A motor according to Claim 1, characterized in that said first coupling is established by direct connection of said first diode means (D3) to that end of the winding (22) connected to the first switching means (GTO1) and the second switching means (SCR1) is connected to the other end of the winding (22).

8. A motor according to Claim 1, characterized in that said phase windings comprise a primary winding (22) connected between said second diode means (D1) and said first controlled switching means (TR10), and a secondary winding (23) closely coupled to the primary winding, said secondary winding (23) being connected to charge said capacitor (C1) through said first diode means (D3).

9. A motor according to Claim 8, characterized in that one end of said secondary winding (23) is connected to said first diode (D3) means and the other end is connected to the supply (B+).

**Revendications**

1. Un moteur électrique comportant un stator à enroulements multiples de phase excitables séquentiellement et un rotor magnétisé pour chercher une position de réluctance minimale dans un champ électromagnétique à déplacement progressif produit par lesdits enroulements de phase, un premier moyen de commutation contrôlée (GTO1) en série par rapport à une alimentation en courant continu avec au moins une partie de chaque enroulement de phase, un moyen de contrôle dudit premier moyen de commutation contrôlée pour produire ledit champ électromagnétique à déplacement progressif, un condensateur à accumulation de charge (C1) associé à chaque enroulement de phase (22) l'une des bornes dudit condensateur étant connectée par l'intermédiaire d'un circuit de faible impédance à ladite alimentation et un premier et second moyens de diode (D3, D1) étant associés à chaque enroulement de phase, le premier moyen de diode (D3) établissant une connexion entre l'autre borne du condensateur (C1) et ledit enroulement, et étant orienté pour permettre le passage de faible impédance audit condensateur depuis l'enroulement du courant direct généré par la désintégration du champ produit par ledit enroulement après l'arrêt du moyen de commutation, et le deuxième moyen de diode (D1) étant placé entre l'alimentation et l'enroulement de phase de manière à présenter un passage de faible impédance pour le courant direct provenant de l'alimentation mais une impédance élevée au courant réfléchi, caractérisé en ce qu'une autre connexion est établie entre l'autre borne du condensateur (C1) et ledit enroulement par l'intermédiaire d'un deuxième moyen de commutation contrôlée (SCR1), et en ce que des moyens sont prévus pour mettre en marche ledit second moyen de commutation (SCR1) le plus possible simultanément au premier moyen de commutation (GTO1) pour fournir un passage de faible impédance au courant provenant dudit condensateur (C1) dans le sens direct par ledit enroulement (22) jusqu'audit premier moyen de commutation contrôlée.

2. Un moteur selon la revendication 1, caractérisé en ce que le rotor (10) a une configuration de rotor homopolaire.

3. Un moteur selon la revendication 2, caractérisé en ce que le rotor (10) est magnétisé en permanence.

4. Un moteur selon la revendication 3, caractérisé en ce que le rotor (10) comporte un arbre d'induit (11) et des moyens d'aimant permanent (12, 13, 14) montés et fixés sur ledit arbre et ayant une pluralité de pôles nord espacés et une pluralité de pôles sud espacés, lesdits pôles se déplaçant suivant deux trajectoires circulaires, en ce que le stator (16) comprend une pluralité d'électro-aimants (20) espacés comprenant chacun au moins une bobine (22) comprise par l'un desdits enroulements de phase et montée de sorte que l'excitation des bobines comprises par différents enroulements de phase produise une réluctance minimale des circuits magnétiques reliant le rotor et le stator à des positions angulaires différentes du rotor, et en ce que le moyen (28) de commande dudit premier moyen de commutation (GTO1) réagit à la rotation dudit rotor (10) en générant des signaux de commande mettant en marche le premier moyen de commutation (GTO1) en série avec chaque enroulement de phase quand le rotor se déplace vers une position de réluctance minimale et arrêtant ledit premier moyen de commutation avant que le rotor ne passe sur ladite position de réluctance minimale.

5. Un moteur selon la revendication 4, caractérisé en ce que le premier moyen de commutation (GTO1) est mis en marche pour permettre au courant d'excitation de passer dans lesdites bobines (22) en une séquence prédéterminée pour créer un champ magnétique qui repousse lesdits pôles desdits moyens d'aimant permanent (12, 13, 14) quand lesdits moyens d'aimant permanent ont tourné et dépassé lesdits électro-aimants (20).

6. Un moteur selon la revendication 4 ou 5, caractérisé en ce que le premier moyen de commutation (GTO1) est mis en marche pour permettre au courant d'excitation de passer dans lesdites bobines (22) en une séquence prédéterminée pour créer un champ magnétique qui attire lesdits moyens d'aimant permanent (12, 13, 14) quand lesdits moyens d'aimant permanent tournent vers lesdits électro-aimants (20).

7. Un moteur selon la revendication 1, caractérisé en ce que ledit premier couplage est établi par connexion directe dudit premier moyen de diode (D3) à l'extrémité de l'enroulement (22) connectée au premier moyen de commutation (GTO1) et le deuxième moyen de commutation (SCR1) est connecté à l'autre extrémité de l'enroulement (22).

8. Un moteur selon la revendication 1, caractérisé en ce que lesdits enroulements de phase comprennent un enroulement primaire (22) connecté entre ledit second moyen de diode (D1) et ledit premier moyen de commutation contrôlée (TR10), et un enroulement secondaire (23) étroitement couplé à l'enroulement primaire, ledit enroulement secondaire (23) étant connecté pour charger ledit condensateur (C1) par l'intermédiaire dudit premier moyen de diode (D3).

9. Un moteur selon la revendication 8, caractérisé en ce que l'une des extrémités dudit enroulement secondaire (23) est connectée audit premier moyen de diode (D3) et l'autre extrémité est connectée à l'alimentation (B + ).

**Patentansprüche**

1. Elektromotor mit einem Ständer mit mehrfachen aufeinanderfolgend erregbaren Phasenwicklungen und einem Läufer, der so magnetisiert ist, daß er innerhalb eines von den besagten Phasenwicklungen erzeugten, sich fortschreitend bewegenden elektromagnetischen Feldes eine Stellung minimaler Reluktanz aufsucht, ersten gesteuerten Schaltmitteln (GTO1) in Reihe zu einer Gleichstromversorgung mit mindestens einem Teil jeder Phasenwicklung, Mitteln zur Steuerung der besagten ersten gesteuerten Schaltmittel zur Erzeugung des besagten, sich fortschreitend bewegenden elektromagnetischen Feldes, einem jeder Phasenwicklung (22) zugeordneten Ladungsspeicherkondensator (C1), wobei ein Anschluß des besagten Kondensators über einen niederohmigen Weg mit der besagten Versorgung verbunden ist, und jeder Phasenwicklung zugeordneten, ersten und zweiten Diodenmitteln (D3, D1), wobei das erste Diodenmittel (D3) eine Verbindung zwischen dem anderen Anschluß des Kondensators (C1) und der besagten Wicklung herstellt und so orientiert ist, daß es den nach dem Abschalten des Schaltmittels, durch das Zusammenbrechen des von der besagten Wicklung erzeugten Feldes erzeugten Vorwärtsstrom niederohmig von der Wicklung zum besagten Kondensator durchfliessen läßt, und wobei das zweite Diodenmittel (D1) so zwischen der Versorgung und der Phasenwicklung vorgesehen wird, daß es für Vorwärtsstrom von der Versorgung einen niederohmigen Weg, für Rückstrom jedoch einen hochohmigen Weg darstellt, dadurch gekennzeichnet, daß zwischen dem anderen Anschluß des Kondensators (C1) und der besagten Wicklung eine alternative Verbindung über zweite gesteuerte Schaltmittel (SCR1) hergestellt wird, und daß Mittel zum Anschalten des besagten zweiten Schaltmittels (SCR1) im wesentlichen gleichzeitig mit dem besagten ersten Schaltmittel (GTO1) vorgesehen sind, um einen niederohmigen Stromfluß vom besagten Kondensator (C1) in der Durchflußrichtung durch die besagte Wicklung (22) zum besagten ersten gesteuerten Schaltmittel vorzusehen.

2.  Motor nach Anspruch 1, dadurch gekennzeichnet, daß der Läufer (10) einen Gleichpolläuferaufbau besitzt.

3.  Motor nach Anspruch 2, dadurch gekennzeichnet, daß der Läufer (10) dauermagnetisiert ist.

4.  Motor nach Anspruch 3, dadurch gekennzeichnet, daß der Läufer (10) eine Drehwelle (11) und auf der besagten Weile angebrachte und daran befestigte Dauermagnetmittel (12, 13, 14) umfaßt und eine Mehrzahl von beabstandeten Nordpolen und eine Mehrzahl von beabstandeten Südpolen besitzt, wobei die besagten Pole auf zwei Kreiswegen bewegbar sind, der Ständer (16) eine Vielzahl von beabstandeten Elektromagneten (20) enthält, die jeweils mindestens eine aus einer der besagten Phasenwicklungen bestehende Spule (22) enthalten und so angebracht sind, daß die Erregung der aus unterschiedlichen Phasenwicklungen bestehenden Spulen eine minimale Reluktanz der den Läufer und den Ständer an unterschiedlichen Winkelpositionen des Läufers verbindenden Magnetkreise erzeugt, und daß das Mittel (28) zur Steuerung des besagten ersten Schaltmittels (GTO1) auf die Umdrehung des besagten Läufers (10) reagiert, um Steuersignale zu erzeugen, die das erste Schaltmittel (GTO1) in Reihe mit jeder Phasenwicklung dann durchschalten, wenn sich der Läufer auf eine Stellung minimaler Reluktanz hinzubewegt und das besagte erste Schaltmittel abschalten, bevor der Läufer die besagte Stellung minimaler Reluktanz passiert.

5.  Motor nach Anspruch 4, dadurch gekennzeichnet, daß das erste Schaltmittel (GTO1) durchgeschaltet wird, damit Erregungsstrom in einer vorbestimmten Folge in den besagten Spulen (22) fließen kann, um ein Magnetfeld zu erzeugen, das, nachdem sich die besagten Dauermagnetmittel an den besagten Elektromagneten (20) vorbeigedreht haben, die besagten Pole der besagten Dauermagnetmittel (12, 13, 14) abstößt.

6.  Motor nach Anspruch 4 oder 5, dadurch gekennzeichnet, daß die besagten ersten Schaltmittel (GTO1) durchge-schaltet werden, damit Erregungsstrom in einer vorbe-stimmten Folge in den besagten Spulen (22) fließen kann, um ein Magnetfeld zu erzeugen, das dann, wenn sich die besagten Dauermagnetmittel auf die besagten Elektromagneten (20) hin drehen, die besagten Dauermagnetmittel (12, 13, 14) anzieht.

7.  Motor nach Anspruch 1, dadurch gekennzeichnet, daß die besagte erste Verkupplung durch direkte Verbindung des besagten ersten Diodenmittels (D3) mit dem mit dem ersten Schaltmittel (GTO1) verbundenen Ende der Wicklung (22) hergestellt wird und das zweite Schaltmittel (SCR1) mit dem anderen Ende der Wicklung (22) verbunden ist.

8.  Motor nach Anspruch 1, dadurch gekennzeichnet, daß die besagten Phasenwicklungen eine zwischen dem besagten zweiten Diodenmittel (D1) und dem besagten ersten gesteuerten Schaltmittel (TR10) geschaltete Primärwicklung (22) und eine mit der Primärwicklung eng verkoppelte Sekundärwicklung (23) umfassen, wobei die besagte Sekundärwicklung (23) so geschaltet ist, daß der besagte Kondensator (C1) über das besagte erste Diodenmittel (D3) geladen wird.

9. Motor nach Anspruch 8, dadurch gekennzeichnet, daß das eine Ende der besagten Sekundärwicklung (23) mit dem besagten ersten Diodenmittel (D3) verbunden ist und das andere Ende mit der Versorgung (B +) verbunden ist.

FIG. 2

FIG. 1

FIG. 3a

FIG. 4

FIG. 3b

EP 0 242 456 B1

FIG. 5

FIG.6